# EUROPÄISCHE PATENTSCHRIFT

(11) **EP 3 084 468 B1**
(45) Veröffentlichungstag und Bekanntmachung des Hinweises auf die Patenterteilung: **05.01.2022**
(21) Anmeldenummer: 14795606.4
(22) Anmeldetag: 04.11.2014
(51) Int. Cl.: G01S 15/931, G01S 7/52

(54) **VERFAHREN ZUR SENSORANBINDUNG**
METHOD FOR CONNECTING A SENSOR
SYSTÈME DE RACCORDEMENT DE CAPTEUR

(30) Priorität: 18.12.2013 DE 102013226376
(43) Veröffentlichungstag der Anmeldung: 26.10.2016
(60) Teilanmeldung: 21198216.0
(73) Patentinhaber: Robert Bosch GmbH, 70442 Stuttgart (DE)
(72) Erfinder: SCHMID, Dirk, 75397 Simmozheim (DE); RUDOLPH, Marcel, 71229 Leonberg (DE); SCHUMANN, Michael, 70597 Stuttgart (DE)
(86) Internationale Anmeldenummer: PCT/EP2014/073667
(87) Internationale Veröffentlichungsnummer: WO 2015/090710

(56) Entgegenhaltungen:
- DE-A1-102008 044 367
- US-A- 5 564 419
- US-A1- 2009 048 522
- None

## Beschreibung

### Stand der Technik

Ultraschallbasierte Messsysteme werden eingesetzt, um eine Distanz zu einem vor einem Ultraschallsensor befindlichen Objekt zu vermessen. Die eingesetzten Ultraschallsensoren basieren auf dem Puls/Echo-Verfahren. In diesem Betrieb sendet der Sensor einen Ultraschall-Puls aus und misst die durch ein Objekt hervorgerufene Reflexion des Ultraschall-Pulses, d.h. dessen Echos. Der Abstand zwischen dem Ultraschallsensor und dem Objekt errechnet sich über die gemessene Laufzeit des Echos und die Schallgeschwindigkeit. Bei derzeitig eingesetzten ultraschallbasierten Messsystemen erfolgt die Übertragung der Echoinformationszeit analog. Dies bedeutet, dass zum Zeitpunkt der Überschreitung einer Schwellwertkennlinie ein Spannungssignal für eine bestimmte Zeitdauer (Echobreite) gesetzt wird. Die Messung der eigentlichen Laufzeit erfolgt nachfolgend in einem entsprechenden Steuergerät (ECU). Ultraschallsensoren der nächsten Entwicklungsgenerationen wandeln das Echosignal im Ultraschallsensor durch einen Analog/Digital-Wandler in ein Digitalsignal um und verarbeiten die Empfangssignale durch entsprechende Signalverarbeitungsprozessoren. Daher bietet sich an, die Echoinformation digital zu übertragen. Dies erlaubt es, dass auch weitere Merkmale des Echos, beispielsweise die Amplitude, die Laufzeit, die Pulsbreite an eine übergeordnete Steuereinheit übertragen werden können.

Zur digitalen Übertragung von Echoinformationen ist eine busfähige Sensoranbindung wünschenswert, damit Einsparungen am Kabelbaum realisiert werden können. Es gibt bereits verschiedene digitale Busse, die für eine mögliche Anbindung von Ultraschallsensoren im Fahrzeug genutzt werden können.

Bei einem LIN-Bus ist von Nachteil, dass dieser nur eine sehr eingeschränkte Datenübertragungsrate erlaubt, beispielsweise nur 20 kBit/s. die Nettoübertragungsrate beim LIN-Bus fällt noch deutlich geringer aus, da der Anteil der Strukturdaten relativ groß ist. Beim LIN-Bus werden Binärinformationen spannungsmoduliert, also durch Modulation der anliegenden Spannung , üblicherweise zwischen Werten von ca. 12 V und 0,7 V übertragen. Ein weiterer Nachteil des LIN-Busses ist darin zu erblicken, dass sehr hohe Spannungspegel auftreten können, die den Messbetrieb des Ultraschallsensors stören, so dass eine Kommunikation während des Messbetriebes nur schwer möglich erscheint.

Als weiterer digitaler Bus wäre der CAN-Bus zu nennen, mit welchem deutlich höhere Übertragungsraten (Größenordnung 500 kBit/s) möglich sind. Die Kosten für eine Sensorschnittstelle bei einem CAN-Bus sind aufgrund der hohen Bandbreite und Vielseitigkeit des CAN-Busses vergleichsweise hoch.

Des Weiteren ist als digitaler Bus der PSI5-Bus bekannt, der in Fahrzeugen, beispielsweise zur Anbindung eines Airbagsensors Verwendung findet. Die Übertragung beim PSI5-Bus erfolgt spannungsmoduliert vom Steuergerät zum Sensor mit 2 kBit/s und strommoduliert vom Sensor zum Steuergerät mit bis zu 189 kBit/s. Der Modulationsstrom beträgt bei PSI5-Bussen typischerweise um die 20 mA. Die Übertragung basiert auf einer 2-Draht-Schnittstelle mit verdrillten Adern. Die Stromversorgung der Airbagsensoren erfolgt über die Datenleitung, allerdings sind nur geringe Versorgungsströme vorgesehen, die in der Größenordnung bis zu maximal 19 mA liegen. In der Schnittstelle des Steuergerätes ist eine Nachführung auf das variierende Null-Stromniveau vorgesehen.

Der PSI5-Bus, der Eingang in Kraftfahrzeuganwendungen, insbesondere als Airbagsensor gefunden hat, ist hinsichtlich seines Kommunikationsprotokolls sehr stark an diese Anwendung angepasst. Die mit einem PSI5-Kommunikationsprotokoll üblicherweise übertragenen Daten unterscheiden sich in ihrer Struktur signifikant von den Daten, die mittels eines Ultraschallmesssystems zu übertragen sind. Der Unterschied ist, dass die zeitliche Abfolge für die Abfrage der Daten für Ultraschallmesssysteme und für Airbagsensoren zeitlich sehr stark voneinander differieren; so ist für die Airbagsensoren eine sehr schnelle Abfrage notwendig, wohingegen bei Ultraschallsystemen Abfragezeiten im Bereich zwischen 10 ms und 40 ms liegen.

Aufgrund seiner bisherigen Einsatzgebiete weist der PSI5-Bus als Nachteil eine geringe Übertragungsrate auf. Des Weiteren weist der PSI5-Bus keine 1-Draht-Schnittstelle auf und es ist eine höhere Pinzahl am Sensor vorzusehen. Mögliche Eigenstörungen des Sensors bei gleichzeitiger Kommunikation während des Messbetriebes können aufgrund des relativ hohen Modulationsstroms auftreten. Des Weiteren wird ein relativ aufwendiges Design hinsichtlich einer Steuergerät-Schnittstelle benötigt, was einer Stromnachführung geschuldet ist. Schließlich ist festzuhalten, dass das bisher an PSI5-Bussen eingesetzte Kommunikationsprotokoll nicht weiter verwendbar, sondern in jedem Falle für neue Anwendungen zu modifizieren ist.

DE 10 2008 000 570 A1 bezieht sich auf ein ultraschallbasiertes Fahrerassistenzsystem. Dieses umfasst mindestens einen Ultraschallsensor und eine Schnittstelle zum Datenaustausch mit anderen gleichartigen Sensoren und einem Steuergerät. Die Schnittstelle ermöglicht eine Kommunikation mit mehreren anderen Bus-Teilnehmern, wobei ein individueller Identifikationscode eines jeden der angeschlossenen Sensoren mittels des ebenfalls über einen Bus kommunizierenden Steuergerätes auslesbar ist. Schnittstelle und Bus-System basieren auf einem modifizierten PSI5-System. Das PSI5-ähnliche System mit einer 2-Drahtverbindung wird derart erweitert, dass mehr als maximal vier Sensoren angeschlossen und betrieben werden können, wobei eine weitere Leitung eingefügt wird, die es ermöglicht, die Stromversorgung der Sensoren von der Datenübertragung zu trennen. Demnach besteht die Möglichkeit, die logische und geographische Adressierung auch ohne ein sogenanntes Daisy-Chain-Verfahren durchzuführen und das Datenprotokoll hinsichtlich der Bit-Breiten und eines erweiterten Halbduplex-Modus' zu optimieren. Aus DE 10 2008 000 570 A1 geht ein Verfahren zur Adressierung der Sensoren im Bus-System hervor, wobei eine logische und positionsbezogene Adressierung der Sensoren über eine Adressierungssequenz durch eine bestimmte Form der Busarbitrierung mittels gezielter Abfrage der im System verbauten Seriennummern erfolgt. Ein erstes Verfahren bedient sich einer sukzessiven Abfrage des Identifikationscodes, während ein zweites Verfahren auf einem zeitversetzten Anschließen an das Bus-System basiert.

DE 10 2008 044 367 A1 bezieht sich ebenfalls auf ein ultraschallbasiertes Fahrerassistenzsystem mit einem intelligenten Sensor für ein Kraftfahrzeug. Dieser ist bevorzugt als Ultraschallsensor ausgebildet und verfügt über eine Schnittstelle, beispielsweise eine PSI5-Schnittstelle in Buskonfiguration. Der Sensor weist einen Taktgeber auf, welcher ausgebildet ist, ein Taktsignal zu erzeugen, das den Zeittakt zum Übertragen des Datensatzes repräsentiert. Der Sensor kommuniziert mit einem Master entsprechend einem Kommunikationsprotokolls. Unter Anwendung des Kommunikationsprotokolls in Abhängigkeit von einem von dem Sensor-Taktgeber erzeugten Zeittakt wird der Datensatz an den Master während eines durch einen Zeitabschnitt gebildeten Zeitfensters übertragen, wobei die Taktfrequenz des Zeittaktes in Abhängigkeit eines die Taktfrequenz repräsentierenden Regelsignals verändert werden kann. Der Taktgeber des Sensors erzeugt ein Trägersignal, so dass die Taktfrequenz des Sensor-Taktgebers der ermittelten Taktfrequenz des Masterzeittaktes entspricht.

Die Anforderungen an die Übertragungsrate an ein Übertragungssystem sind beispielsweise:
- ≥ 10 kBit/s für die Übertragung vom Steuergerät zum Ultraschallsensor
- ≥ 100 kBit/s für die Übertragung vom Ultraschallsensorsteuergerät
- Geringe Eigenstörung bei Kommunikation während des Messbetriebs
- Kostengünstige Umsetzung
- Möglichst eine 1-Draht-Kommunikationsschnittstelle

### Darstellung der Erfindung

Erfindungsgemäß wird ein Verfahren zum Betreiben eines Sensorsystems mit mindestens einem Ultraschallsensor und mindestens einem Steuergerät vorgeschlagen, bei dem Daten von dem mindestens einen Ultraschallsensor an das Steuergerät strommoduliert und Daten von dem Steuergerät an den mindestens einen Ultraschallsensor spannungsmoduliert übertragen werden, wobei ein Synchronisationspuls (SYNC) in unregelmäßigen und frei definierten Abständen erfolgt und durch einen Sendebefehl vom Steuergerät an dem mindestens einen Ultraschallsensor als Ultraschallsendebefehl realisiert ist.

Dadurch ist eine kostengünstige bidirektionale, volldigitale sowie datenbusfähige Sensoranbindung eines Ultraschallsensors, eines Sensorsystems an ein Steuergerät gewährleistet. Durch die erfindungsgemäß vorgeschlagene Lösung können nach Modifikation einer entsprechenden PSI5-Datenbus-Schnittstelle eben dieser Datenbus und ein LIN-Datenbus zur Datenübertragung zur Ausnutzung der Vorteile der beiden Bussysteme miteinander kombiniert werden.

In vorteilhafter Ausgestaltung des der Erfindung zugrundeliegenden Gedankens erfolgt die Datenübertragung von dem mindestens einen Ultraschallsensor an das Steuergerät über eine PSI5-Schnittstelle mit einer Übertragungsrate von ≥ 378 kBaud/s auf einer Einzelleitung. Zur Übertragung der Daten von dem mindestens einen Ultraschallsensor an das Steuergerät wird ein Sendestrom auf einer Kommunikationsleitung moduliert. Der Sendestrom liegt in einer Größenordnung von ≤ 100 mA, bevorzugt von ≤ 10 mA. Wird ein Modulationsstrom auf diese Größenordnung reduziert, so kann der Pegel von Eigenstörungen drastisch reduziert werden. Dadurch ist ein Betrieb mit minimierten Eigenstörungen gewährleistet. Unter Eigenstörung wird im vorliegenden Zusammenhang ein Übersprechen von Kommunikationspulsen auf Empfangskanäle im Ultraschallsensor-Messbetrieb verstanden.

Der erfindungsgemäß vorgeschlagenen Lösung folgend, werden Ultraschall-Echo-Daten des mindestens einen Ultraschallsensors strommoduliert an das Steuergerät übertragen, was bevorzugt derart erfolgt, dass zu einem jeden Ultraschall-Echo eine entsprechende Echolaufzeit, die Amplitude sowie andere Echomerkmale sowie der Messzustand des betreffenden Ultraschallsensors kodiert an das Steuergerät übertragen werden können. Die Ultraschall-EchoDaten werden bevorzugt in mindestens einem vordefinierten Datenprotokoll mit Bit-Breiten von 16, 24, vorzugweise jedoch mit 32 Bit pro Ultraschall-Echo übertragen.

Die Datenübertragung vom Steuergerät an den mindestens einen Ultraschallsensor umfasst bevorzugt eine Adressierung, einen Sendebefehl, mindestens eine Konfigurationsbefehl und einen eine Zeitspanne definierten Synchronisationspuls (SYNC). Die Datenübertragung von dem mindestens einen Ultraschallsensor an das Steuergerät wird mittels eines Datenbusses vorgenommen und erfolgt auf ein und demselben Datenbus in beide Richtungen, vorzugsweise auf der vorstehend erwähnten Einzeldrahtverbindung.

Die Übertragungsrate für die spannungsmodulierte Übertragung von Daten vom Steuergerät an den mindestens einen Ultraschall-Sensor liegt bevorzugt in einer Größenordnung von ≥ 10 kBit/s, bevorzugt bei 20 kBit/s.

Das Ultraschallsystem, welches gemäß dem vorstehenden Verfahren hinsichtlich der Datenübertragung strommoduliert bzw. spannungsmoduliert betrieben wird, umfasst einen Ultraschallsensor, der ausgebildet ist um eine Datenübertragung mit Strommodulation an ein Steuergerät zu ermöglichen. Das Ultraschallsystem umfasst ferner ein Steuergerät, das ausgebildet ist zur spannungsmodulierten Übertragung von Daten an mindestens einen Ultraschallsensor, der gemäß des Verfahrens zum Betreiben eines Sensorsystems wie oben stehend skizziert betrieben werden kann.

### Vorteile der Erfindung

Die erfindungsgemäß vorgeschlagene Lösung ermöglicht den Betrieb eines Sensorsystems, bei welchem die Datenübertragung zwischen mehreren Ultraschallsensoren und einem dieses steuernden Steuergerät, einerseits über einen modifizierten PSI5-Datenbus und andererseits spannungsmoduliert, ähnlich einem LIN-Datenbus erfolgt, wodurch die Vorteile beider Bussysteme miteinander kombiniert werden können. Der Ausgangspunkt ist eine strommodulierte Übertragung mit hoher Bandbreite von einer PSI5-Schnittstelle eines entsprechenden Datenbusses. Die Übertragungsrate wird durch entsprechende Bauteilauslegung über die verfügbaren 189 kBit/s auf 378kBit/s weiter gesteigert. Eine Einschränkung der Übertragung auf verdrillte Leitungen kann bei Ultraschallsensoren entfallen, da Leitungskapazitäten das Messergebnis des Ultraschallsensors nicht beeinflussen. Eine spannungsmodulierte Übertragungsgrate kann auf über 10 kBit/s, vorzugsweise 20 kBit/s, gesteigert werden, da die vorteilhafte Eigenschaft von LIN-Datenbussen genutzt werden kann, wonach diese bei höheren Pegeln arbeiten und demzufolge derartige Übertragungsraten sicherstellen können. In vorteilhafter Weise kann durch die Implementierung des erfindungsgemäß vorgeschlagenen Verfahrens erreicht werden, dass der Modulationsstrom zur Vermeidung von Eigenstörungen weit genug abgesenkt werden kann, vorzugsweise in einer Größenordnung unterhalb von 10 mA.

Mit der erfindungsgemäß vorgeschlagenen Lösung lassen sich hohe Datenraten realisieren. So erfolgt die Datenübertragung vom Steuergerät zu dem mindestens einen Ultraschallsensor mit 20 kBit/s. Befehle, so zum Beispiel ein Ultraschallsendebefehl, erfolgen schneller, so dass eine schnellere Ersterfassung von Objekten möglich wird. Die Datenübertragung von dem mindestens einen Ultraschallsensor zum Steuergerät erfolgt mit einer Übertragungsrate von 378 kBit/s. Die Zahl der Echodaten sowie die Zahl der Echomerkmale können groß gewählt werden, so dass sich eine bessere und schnellere Objekterfassung ergibt. Des Weiteren besteht die Möglichkeit, dass die Zahl der Teilnehmer auf dem Datenbus erweitert werden kann, da sich eine sehr einfache und damit kostengünstige Verdrahtung erstellen lässt. Trotz geringer Eigenstörung bei der Strommodulation können eine möglicherweise erfolgende Störung des Messbetriebes sowie ein gemessener Eingangspegel während der Übertragung über dem normalen Verstärkerrauschniveau liegen. Dies ist dann kritisch, wenn das erwartete Echosignal nur gering über dem Rauschen liegt, was bevorzugt bei großen Objektabständen, einer Echolaufzeit > 20 ms vorliegt. Bei geringeren Objektabständen ist eine Störung aufgrund der wesentlich höheren Signalpegel der Echos jedoch tolerierbar. Daher ist Ziel, die Übertragung in einer Zeit < 20 ms für alle Busteilnehmer des Datenbusses zu realisieren. Die erfindungsgemäß vorgeschlagene Lösung vermeidet eine aufwändige Stromnachführung des Stromnullniveaus, wie dies bei einem PSI5-Datenbus erforderlich ist. Es erfolgt keine Stromversorgung der Sensoren über die Kommunikationsleitung, sondern stattdessen eine reine Datenübertragung mit den entsprechenden Datenübertragungsraten. Die Realisierung des erfindungsgemäß vorgeschlagenen Verfahrens zum Betrieb eines Sensorsystems, insbesondere eines Ultraschallsensorsystems, greift auf ein Datenübertragungsprotokoll zurück, welches es ermöglicht, dass bei einem ablaufenden Messbetrieb keine Störung desselben durch einen SYNC-Pulses erfolgt, da dieser im Ultraschalltransmissionsbefehl (Sendebefehl) mit integriert ist. Der SYNC-Puls wird daher auch in unregelmäßigen Rastern, nämlich immer genau dann, wenn das Steuergerät eine Ultraschallemission wünscht, ausgesendet. Bei einem PSI5-Datenbus, wie beispielweise für einen Airbag, sind die SYNC-Pulse in wohldefinierten Abständen erforderlich und somit für Anwendungen bei Ultraschallsystemen nicht geeignet. Der Sendebefehl wird zur Kalibration der RC-Oszillatoren im ASIC-Baustein verwendet. Damit ist die Anforderung auf Kurzzeitstabilität gerichtet, wodurch Genauigkeiten < 0,2 bis 0,5 % möglich werden. Da kein hochgenauer Quarzoszillator erforderlich ist, kann eine Kosteneinsparung realisiert werden. Da geringe Pausen zwischen den einzelnen Kommunikationsslots der Busteilnehmer vorliegen, kann eine hohe Nettodatenrate realisiert werden, im Vergleich zu LIN-Datenbussen, bei denen die Pausen wesentlich länger sind, da die Zeitbasis bei LIN-Bussen wesentlich ungenauer ist. Damit lassen sich große Datenmengen übertragen, im Gegensatz zum PSI5-Protokoll erfolgt die Absicherung durch ein 8 Bit-Datensicherungsverfahren CRC (Cyclic Redundancy Check) auf allen Daten und nicht mittels eines 3 Bit-Datensicherungsverfahren (CRC) auf jedes Datenword. Somit ergibt sich ein geringerer Aufwand, was sich in einer wesentlich höheren Nettodatenrate niederschlägt.

### Ausführungsvarianten der Erfindung

Beim erfindungsgemäß vorgeschlagenen Verfahren kann der Betrieb eines Ultraschallsensorsystems mit mindestens einem Ultraschallsensor und mindestens einem Steuergerät sichergestellt werden. Die Datenübertragungsrate vom Steuergerät zu dem mindestens einen Ultraschallsensor ist einerseits ausreichend hoch, ferner können Eigenstörungen des Ultraschallsensors bei gleichseitiger Kommunikation während des Messbetriebes aufgrund des relativ niedrigen Modulationsstroms vermieden oder zumindest stark unterdrückt werden.

Durch eine Modifikation eines Kommunikationsprotokolls, d.h. dessen spezielle Anpassung an die Gegebenheiten bei einem Sensorsystem wie beispielweise einem Ultraschallsensorsystem, können die Themen Adressierung, Sendebefehl,

Konfigurationsbefehle, Übertragungsslot/SYNC-Puls und Echodatenübertragung an das Steuergerät modifiziert werden.

Durch das erfindungsgemäß vorgeschlagene Verfahren erfolgt eine Adressierung eines der Ultraschallsensoren des Ultraschallsensorsystems über das Steuergerät, beispielsweise des bekannten Daisy-Chain-Verfahrens. Über eine im jeweiligen Fahrzeug implementierte Verkabelung ist damit der physikalische Ort des Ultraschallsensors im Stoßfänger des jeweiligen Fahrzeugs festgelegt. Alternativ zur Implementierung des Daisy-Chain-Verfahrens kann eine logische und geographische Adressierung in mehreren Schritten erfolgen, wobei während einer Initialisierung alle Ultraschallsensoren vom Steuergerät gleichzeitig angesprochen werden könne. Voraussetzung dafür ist eine eindeutige Sensor-Seriennummer bzw. eine Sensor-ID (32 - 48 Bit), die im Sensor oder einem EEPROM hinterlegt ist. Die Grundidee der logischen und geographischen Adressierung des jeweiligen Ultraschallsensors liegt darin, dass eine Adressierungssequenz durch eine bestimmte Form einer Bus-Arbitrierung unter Zuhilfenahme und gezielter Abfrage der im Sensorsystem verbauten Seriennummern durchgeführt wird. In einem zweiten Schritt erfolgt ein sogenanntes "Autolocate"-Verfahren, zum Beispiel durch einen spezifischen Lärmalgorithmus, da die Abstände der einzelnen Ultraschallsensoren voneinander bekannt sind, eine bekannte Objektumgebung in Gestalt einer "schrägen Wand" vorliegt oder durch eine statistische Auswertung von Direkt- und/oder Kreuzechos unter Zuhilfenahme der jeweils im Fahrzeug vorliegenden Lenkwinkelinformation. Alternativ kann beim Fahrzeughersteller beziehungsweise beim Lieferanten der Stoßfängereinheit durch eine Kalibriereinrichtung, die jedem Sensor ein Direktecho durch eine Schallquelle zusendet, die Position des Sensors übermittelt werden. Des Weiteren besteht auch die Möglichkeit, innerhalb dieses Verfahrens eine Einhaltung einer definierten Einbaureihenfolge sowie eine Quittiereinrichtung in einem jeweiligen Prüfstand vorzusehen, so dass die jeweiligen Ultraschallsensoren des Sensorsystems eindeutig identifiziert und lokalisiert werden können.

Ein erfindungsgemäß modifiziertes Kommunikationsprotokoll umfasst darüber hinaus einen Sendebefehl.

Über einen Sendebefehl, der vom Steuergerät an den mindestens einen Ultraschallsensor übermittelt wird, werden die Ultraschallsensoren zur Emission von Ultraschall-Pulsen animiert. Der Sendebefehl setzt sich im Allgemeinen aus folgenden Komponenten zusammen: einem Start-Bit, einer Befehls-ID, einer Adressierung, einer Sendeinformation, einer Parity Information, und einem Stop-Bit. Der Sendebefehl hat in der Regel eine fest vorgegebene Bit-Breite. Über die jeweilige Übertragungsrate ist damit auch eine feste Zeit festgelegt, die zwischen dem Start-Bit und dem Stop-Bit des jeweiligen Sendebefehles vergeht. Das Stop-Bit des Sendebefehls dient dabei als Trigger für die Imitierung des Ultraschall-Pulses. Dessen Emission findet dann mit einer festen Verzögerung bezogen auf das jeweilige Stop-Bit statt. Über die vorstehend beschriebene Adressierung können sowohl nur einer als auch mehrere Ultraschallsensoren, die über den jeweiligen Datenbus miteinander verbunden sind, zur Aussendung von Ultraschall-Pulsen animiert werden. Das Kommunikationsprotokoll umfasst darüber hinaus auch Informationen, wann der Ultraschallsensor seine Daten überträgt. Dieser Zeitpunkt bzw. ein dementsprechender Zeitslot ist so gewählt, dass die damit verbundenen Eigenstörungen in einem Zeitbereich mit hohem Untergrundrauschen (Bodenclutter) gelegt werden.

Daneben umfasst das Kommunikationsprotokoll Konfigurationsbefehle, welche die nachfolgenden Informationen umfassen: Ein Start-Bit, eine Befehls-ID, eine Adressierung, Konfigurationsdaten und Parity/CRC.

Die Absicherung der jeweiligen Konfigurationsdaten erfolgt für ein für die entsprechende Fehl-ID festgelegtes Schema, entweder über ein Parity-Bit oder ein Datenabsicherungsverfahren, z.B. ein CRC-Verfahren (CRC = Cyclic Redundancy Check).

Des Weiteren umfasst das Kommunikationsprotokoll Informationen über einen Synchronisationsbus (SYNC-Puls), beziehungsweise über Datenübertragungsslots. Über den vorstehend erläuterten Konfigurationsbefehl werden den jeweiligen Ultraschallsensoren, die mit dem Datenbus kommunizieren, feste Zeitscheiben für die Übertragung ihrer jeweiligen Daten an das Steuergerät vorgegeben. Diese Zeitscheiben bzw. Zeitspannen beziehen sich auf einen Synchronisationspuls. Der Synchronisationspuls darf aufgrund einer möglichen Störung des Messbetriebes nicht im Messfenster, d.h. dem Messzeitraum der einzelnen Ultraschallsensoren, abgesetzt werden. Gemäß dem erfindungsgemäß vorgeschlagenen Verfahren ist dieser als ein definiertes Bit innerhalb des Sendebefehls (vorzugsweise als das jeweilige Stop-Bit) definiert. Ein Ultraschallsensor innerhalb des Sensorsystems kann mehrere Zeitscheiben für seine Datenbeanspruchung beanspruchen, vorzugsweise steht jedoch für die Datenübertragung nur eine bestimmte Zeitscheibe pro Ultraschallsensor zur Verfügung. Die Länge der jeweiligen Zeitscheibe bzw. die Zeitdauer für die Datenübertragung stellt einen Konfigurationsparameter dar und kann durch einen separat abzusetzenden Befehl auch während des Betriebs des Sensorsystems, insbesondere des Ultraschallsensorsystems, angepasst werden. Dadurch kann das Übertragungsvolumen hinsichtlich der Daten der einzelnen Ultraschallsensoren während des Betriebs des Sensorsystems verändert werden. Dies bietet den Vorteil, dass je nach Betriebszustand und Bedarf einige der Ultraschallsensoren inaktiv werden können.

Die innerhalb des jeweiligen Messzyklus einer Ultraschallmessung beteiligten Ultraschallsensoren führen eine Laufzeitmessung der Ultraschall-Echos innerhalb des jeweiligen Ultraschallsensors durch. Diese Laufzeitmessung stellt eine Basis für die anschließend in dem Steuergerät stattfindende Trilateration dar. Ein lateraler Fehler hängt wesentlich von der Genauigkeit der durchgeführten Laufzeitmessung ab, insbesondere ist während der Trilateration eine relative zeitliche Abweichung der Signale zwischen den einzelnen Ultraschallsensoren von Bedeutung.

Bei der Laufzeitmessung kommen bevorzugt hochgenaue Oszillatoren zum Einsatz. Die eingesetzten Oszillatoren sind mit den jeweiligen Ultraschallsensoren des Sensorsystems zu synchronisieren. Eine derartige Synchronisation erfolgt dabei über das Vermessen eines fest definierten Zeitraumes, eines zuvor definierten Befehls. Bevorzugt wird dabei der obenstehend beschriebene Befehl verwendet. Ferner erfolgt eine Vermessung der Zeitspanne, die zwischen dem Start-Bit und dem Stop-Bit vergeht. Dies hat zusätzlich den Vorteil, dass die Synchronisation immer genau dann erfolgt, wenn eine Übertragung eines Ultraschall-Echos bevorsteht. Damit ist die Anforderung an die Oszillatoren, der Ultraschallsensoren dahingehend angepasst, eine Kurzzeitstabilität über den jeweils kurzen Messzeitraum, dessen Dauer 10 ms bis 50 ms beträgt, zu gewährleisten. Die Oszillatoren werden durch die jeweilige Synchronisation nachgetrimmt. Damit können relative Abweichungen von < 0,5 %, vorzugweise < 0,2 % sichergestellt und gewährleistet werden. Aufgrund der damit erreichten hohen Genauigkeiten können die Pausen zwischen den einzelnen Zeitscheiben (Kommunikationsscheiben) der beteiligten Ultraschallsensoren gering gehalten werden, so dass eine hohe Netto-DatenRate für die Kommunikation zur Verfügung steht.

Im Kommunikationsprotokoll sind darüber hinaus auch Ultraschall-Echodaten von Interesse, die von den jeweiligen Ultraschallsensoren des Ultraschallsystems an das Steuergerät (ECU) übertragen werden. Die Ultraschall-Echodaten der Ultraschallsensoren sind gemäß einem vordefinierten Schema aufgebaut. Die Echodaten haben eine definierte Bit-Breite und enthalten zu jedem Ultraschall-Echo die entsprechende Echolaufzeit sowie weitere Merkmale des Echos. Vorzugweise sind dafür Bit-Breiten von 16, 24 oder 32 Bit pro Ultraschall-Echo definiert. Sind diese Bit-Breiten vorgegeben, ist die Interpretation der erhaltenen Daten von der jeweiligen Applikation abhängig. So können in dem Steuergerät und im entsprechenden Ultraschallsignalsensor durchaus mehrere Datenprotokolle hinterlegt sein. Die Anzahl der Ultraschall-Echos, die in einer vordefinierten Zeitscheibe übertragen werden sollen, kann ebenfalls mit der Konfiguration der Zeitscheibe festgelegt und zur Laufzeit verändert werden. Am Ende einer Übertragung eines Ultraschall-Echos erfolgt eine Übertragung eines weiteren Datenblocks. Dieser charakterisiert den Messzustand des jeweiligen Ultraschallsensors dahingehend, dass beispielsweise ein Fehlerstatus, Eigendiagnose- und/oder Messbedingungen berücksichtigt werden. Den Abschluss eines Datenblocks während der Datenübertragung vom jeweiligen Ultraschallsensor an die übergeordnete Steuereinheit bilden Datenabsicherungsbits (CRC = Cyclic Redundancy Check), das sich über den gesamten an das Steuergerät zu übertragenden Daten innerhalb der Zeitscheibe berechnet.

Das vorstehend beschriebene erfindungsgemäß vorgeschlagene Verfahren erfolgt auf ein und demselben Datenbus. Das Verfahren kann ebenso auf einen Datenbus mit nur einem Teilnehmer, eine sogenannte Punkt-Verbindung - angewendet werden. Eine Adressierung ist in diesem Falle nicht nötig und kann daher entfallen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betreiben eines Sensorsystems mit mindestens einem Ultraschallsensor und mindestens einem Steuergerät, **dadurch gekennzeichnet, dass** Daten derart von dem mindestens einen Ultraschallsensor an das Steuergerät strommoduliert und Daten derart von dem Steuergerät an dem mindestens einen Ultraschallsensor spannungsmoduliert übertragen werden, dass eine bidirektionale, volldigitale sowie datenbusfähige Sensoranbindung des mindestens einen Ultraschallsensors an das mindestens eine Steuergerät gewährleistet ist, wobei zur Übertragung von Daten von dem mindestens einen Ultraschallsensor an das Steuergerät ein Sendestrom auf eine Kommunikationsleitung moduliert wird, wobei ein Synchronisationspuls (SYNC) in unregelmäßigen und frei definierten Abständen erfolgt und durch einen Sendebefehl vom Steuergerät an dem mindestens einen Ultraschallsensor als Ultraschallsendebefehl realisiert ist.

2. Verfahren gemäß Anspruch 1, **dadurch gekennzeichnet, dass** die Daten von dem mindestens einen Ultraschallsensor an das Steuergerät über eine bidirektionale spannungs- und strommodulierte Schnittstelle übertragen werden.

3. Verfahren gemäß dem vorhergehenden Anspruch, **dadurch gekennzeichnet, dass** die Übertragung der Daten an das Steuergerät mit einer Übertragungsrate von > 189 kBit/s und vom Steuergerät zu dem mindestens einen Ultraschallsensor mit einer Übertragungsrate > 10 kBit/s, vorzugsweise 20 kBit/s auf einer Einzelleitung erfolgt.

4. Verfahren gemäß einem der vorhergehenden Ansprüche, **dadurch gekennzeichnet, dass** die Stromstärke des Sendestroms ≤ 100 mA, bevorzugt ≤ 10 mA beträgt.

5. Verfahren gemäß einem der vorhergehenden Ansprüche, **dadurch gekennzeichnet, dass** Ultraschall-Echodaten des mindestens einen Ultraschallsensors strommoduliert an das Steuergerät übertragen werden, derart, dass zu jedem Ultraschall-Echo Echolaufzeit, Amplitude und andere Echomerkmale sowie der Messzustand des Ultraschallsensors an das Steuergerät übertragen werden.

6. Verfahren gemäß einem der vorhergehenden Ansprüche, **dadurch gekennzeichnet, dass** Ultraschall-Echodaten in mindestens einem vordefinierten Datenprotokoll mit bit-Breiten von 16, 24, 32 Bit pro Ultraschall-Echo übertragen werden.

7. Verfahren gemäß einem der vorhergehenden Ansprüche, **dadurch gekennzeichnet, dass** die Datenübertragung vom Steuergerät an den mindestens einen Ultraschallsensor eine Adressierung, einen Sendebefehl, einen Konfigurationsbefehl und einen eine Zeitspanne definierten Synchronisationspuls (SYNC) umfassen.

8. Verfahren gemäß Anspruch 1 oder 7, **dadurch gekennzeichnet, dass** der Synchronisationspuls (SYNC) nicht in einem Messzeitraum des mindestens einen Ultraschallsensors abgegeben wird.

9. Verfahren gemäß einem der vorhergehenden Ansprüche, **dadurch gekennzeichnet, dass** eine Oszillatorfrequenz in dem mindestens einen Ultraschallsensor über die gemessene Übertragungszeit eines dezidierten Kommunikationsbefehls korrigiert wird.

10. Ultraschallsensor ausgebildet zum strommodulierten Übertragen von Daten an ein Steuergerät gemäß dem Verfahren nach einem der Ansprüche 1 bis 9.

11. Steuergerät ausgebildet zur spannungsmodulierten Übertragung von Daten an mindestens einen Ultraschallsensor gemäß dem Verfahren nach einem der Ansprüche 1 bis 9.

## Claims

1. Method for operating a sensor system having at least one ultrasonic sensor and at least one control device, **characterized in that** data are transmitted from the at least one ultrasonic sensor to the control device in a current-modulated manner and data are transmitted from the control device to the at least one ultrasonic sensor in a voltage-modulated manner such that a bidirectional, fully digital and data-bus-enabled sensor connection of the at least one ultrasonic sensor to the at least one control device is ensured, wherein, in order to transmit data from the at least one ultrasonic sensor to the control device, a transmission current is modulated onto a communication line, wherein a synchronization pulse (SYNC) is effected at irregular and freely defined intervals and is implemented by means of a transmission command from the control device to the at least one ultrasonic sensor as an ultrasonic transmission command.

2. Method according to Claim 1, **characterized in that** the data are transmitted from the at least one ultrasonic sensor to the control device via a bidirectional voltage-modulated and current-modulated interface.

3. Method according to the preceding claim, **characterized in that** the data are transmitted to the control device with a transmission rate of >189 kbit/s and are transmitted from the control device to the at least one ultrasonic sensor with a transmission rate of >10 kbit/s, preferably 20 kbit/s, on a single line.

4. Method according to one of the preceding claims, **characterized in that** the current intensity of the transmission current is ≤100 mA, preferably ≤10 mA.

5. Method according to one of the preceding claims, **characterized in that** ultrasonic echo data from the at least one ultrasonic sensor are transmitted to the control device in a current-modulated manner in such a manner that, for each ultrasonic echo, an echo transit time, an amplitude and other echo features as well as the measurement state of the ultrasonic sensor are transmitted to the control device.

6. Method according to one of the preceding claims, **characterized in that** ultrasonic echo data are transmitted in at least one predefined data protocol having bit widths of 16, 24, 32 bits per ultrasonic echo.

7. Method according to one of the preceding claims, **characterized in that** the transmission of data from the control device to the at least one ultrasonic sensor comprises addressing, a transmission command, a configuration command and a synchronization pulse (SYNC) defined for a period.

8. Method according to Claim 1 or 7, **characterized in that** the synchronization pulse (SYNC) is not emitted in a measurement period of the at least one ultrasonic sensor.

9. Method according to one of the preceding claims, **characterized in that** an oscillator frequency in the at least one ultrasonic sensor is corrected using the measured transmission time of a dedicated communication command.

10. Ultrasonic sensor designed to transmit data to a control device in a current-modulated manner according to the method according to one of Claims 1 to 9.

11. Control device designed to transmit data to at least one ultrasonic sensor in a voltage-modulated manner according to the method according to one of Claims 1 to 9.

## Revendications

1. Procédé permettant de faire fonctionner un système de capteurs, comprenant au moins un capteur à ultrasons et au moins un appareil de commande,
**caractérisé en ce que** des données sont transmises de manière modulée en courant de l'au moins un capteur à ultrasons à l'appareil de commande, et des données sont transmises de manière modulée en tension de l'appareil de commande audit au moins un capteur à ultrasons de façon à assurer un raccordement de capteur bidirectionnel, entièrement numérique et adapté aux bus de données de l'au moins un capteur à ultrasons audit au moins un appareil de commande, dans lequel, pour la transmission de données de l'au moins un capteur à ultrasons à l'appareil de commande, un courant d'émission est modulé sur une ligne de communication, une impulsion de synchronisation (SYNC) ayant lieu à intervalles irréguliers et définis librement et étant réalisée par une instruction d'émission de l'appareil de commande au niveau de l'au moins un capteur à ultrasons comme une instruction d'émission ultrasonore.

2. Procédé selon la revendication 1, **caractérisé en ce que** les données sont transmises par ledit au moins un capteur à ultrasons à l'appareil de commande par l'intermédiaire d'une interface bidirectionnelle modulée en tension et en courant.

3. Procédé selon la revendication précédente, **caractérisé en ce que** la transmission des données à l'appareil de commande est effectuée à une vitesse de transmission > 189 kb/s et de l'appareil de commande audit au moins un capteur à ultrasons à une vitesse de transmission > 10 kb/s, de préférence à 20 kb/s, sur une seule ligne.

4. Procédé selon l'une quelconque des revendications précédentes, **caractérisé en ce que** l'intensité de courant du courant d'émission est de ≤ 100 mA, de préférence ≤ 10 mA.

5. Procédé selon l'une quelconque des revendications précédentes, **caractérisé en ce que** des données d'écho ultrasonore de l'au moins un capteur à ultrasons sont transmises de manière modulée en courant à l'appareil de commande de telle sorte que pour chaque écho ultrasonore, une durée de propagation de l'écho, une amplitude et d'autres particularités d'écho ainsi que l'état de mesure du capteur à ultrasons sont transmis à l'appareil de commande.

6. Procédé selon l'une quelconque des revendications précédentes, **caractérisé en ce que** des données d'écho ultrasonore sont transmises selon au moins un protocole de données prédéfini avec des largeurs de bits de 16, 24, 32 bits par écho ultrasonore.

7. Procédé selon l'une quelconque des revendications précédentes, **caractérisé en ce que** la transmission de données de l'appareil de commande audit au moins un capteur à ultrasons comprend un adressage, une instruction d'émission, une instruction de configuration et une impulsion de synchronisation définis pour un laps de temps (SYNC).

8. Procédé selon la revendication 1 ou 7, **caractérisé en ce que** l'impulsion de synchronisation (SYNC) n'est pas émise dans une période de temps de mesure dudit au moins un capteur à ultrasons.

9. Procédé selon l'une quelconque des revendications précédentes, **caractérisé en ce qu'**une fréquence d'oscillateur dans ledit au moins un capteur à ultrasons est corrigée par le temps de transmission mesuré d'une instruction de communication dédiée.

10. Capteur à ultrasons, réalisé pour la transmission modulée en courant de données à un appareil de commande selon le procédé selon l'une quelconque des revendications 1 à 9.

11. Appareil de commande, réalisé pour la transmission modulée en tension de données à au moins un capteur à ultrasons selon le procédé selon l'une quelconque des revendications 1 à 9.
